# EUROPEAN PATENT SPECIFICATION

(11) **EP 3 786 449 B1**
(45) Date of publication and mention of the grant of the patent: **04.05.2022**
(21) Application number: 19193897.6
(22) Date of filing: 27.08.2019
(51) Int. Cl.: F03D 17/00

(54) **PRESSURE MEASURING SYSTEM FOR WIND TURBINE BLADES**
DRUCKMESSSYSTEM FÜR WINDTURBINENSCHAUFELN
SYSTÈME DE MESURE DE PRESSION POUR PALES D'ÉOLIENNE

(43) Date of publication of application: 03.03.2021
(73) Proprietor: Nidec SSB Wind Systems GmbH, 48499 Salzbergen (DE)
(72) Inventor: BERTOLOTTI, Fabio, 48455 Bad Bentheim (DE); KLEIN, Dirk, 49170 Hagen a.T.W. (DE)
(74) Representative: Bossmeyer, Jörg Peter

(56) References cited:
- US-A1- 2010 260 603
- US-A1- 2012 243 988
- US-A1- 2014 356 165

## Description

### 1 Field of the Invention

The invention relates to wind turbine blades, and particularly relates to the measurement of air pressure on the exterior surface of wind-turbine blades.

### 2 Background of the Invention

Modern wind turbines often operate in complex flow fields, and the blades of these wind turbines experience time-varying changes of air speed and angle of attack that can cause the blade to operate outside its most efficient state. Accordingly, blades of multi-megawatt wind turbines are rotationally connected to a hub, allowing a pitch system in the hub to rotate the blades along the blade axis and, thereby, move the blades, individually or collectively, in and out of the wind direction. A simultaneous measurement of the air pressure at two points on the blade's outer surface, such as the suction and pressure sides of the blade at a selected span location, produces pressure signals indicative of the aerodynamic state, and aerodynamic efficiency, of the blade. When wind turbine blades operate in a complex flow field, the air pressure signals from the blades' outer surface can be used to optimize the control of the wind turbine, including the pitch angle, and, thereby, obtain a desired improvement in wind-turbine operation, such as increased electrical energy production, or reduced blade loads.

The wind turbine environment poses unique challenges for surface pressure measuring systems. First, the measurements must be fast enough to resolve aerodynamic events, such as flow separation from the surface, occurring intermittently over at least a portion of the blade surface. Second, the large centripetal acceleration at the mid and outer span locations on a blade can hinder the accuracy of the measurement device. Third, turbine blades are routinely exposed to lightning strikes, and the associated large current surge within the blade can damage electronic equipment located in the blade, especially in the outer portion of the blade. Fourth, surface contamination, from insects and particle strikes on the surface, as well as ice formation on the surface, can interfere with the pressure measurement. Fifth, commercial applications on blades must be reliable enough to work unattended for long periods of time. And, lastly, commercial applications must be of low cost.

No pressure measuring system exists today that can overcome all the above listed challenges and requirements. Use of through-the-surface perforations, also known as pressure taps, connected to a local pressure measuring unit, are well known in the art as a means to measure the pressure at a point on a surface. The pressure measurement is essentially always a differential value, indicating the difference in pressure between two points. For example, the experimental campaign described in SERI/TP-257-3695, "Aerodynamic Pressure Measurements on a Rotating Wind Turbine Blade" (May 1990) describes such a system. Patent US 8,784,059 B2 displays a complex differential-pressure measuring system having a compressed-air self-purging unit to clear the pressure taps and associated tubing, when an obstruction is detected. The placement of the electronic pressure sensors near the tap location makes the system vulnerable to lightning strikes. Furthermore, system complexity is undesirable, due to increased cost and decreased reliability. Similarly, US2014/0356165 A1 displays a complex differential pressure measuring system using electronic, or fibre optic, pressure sensors located immediately under the pressure tap. This solution is either prone to lightning strikes (electronic sensors), or is exceedingly costly (fibre-optic sensors).

The need remains, therefore, for a commercially viable pressure measuring system for wind turbine blades. Proceeding from this, it is an object of the invention to successfully pass all or at least one of the above listed challenges and requirements to provide a commercially viable solution.

### 3 Brief summary of the Invention

The above-mentioned object is achieved according to the invention by a wind turbine blade according to claim 1. Preferred developments and/or embodiments of the invention are recited in the dependent claims and described in the following specification.

A wind turbine blade has a leading edge, a trailing edge, a blade root, a blade tip, and a blade axis pointing from blade root to blade tip. Preferably, the blade structure is shell like. In particular, the blade or blade structure has a pressure-side skin and a suction-side skin, the suction-side skin joining at the leading edge and trailing edge with the pressure-side skin to form a hollow blade structure. Preferably, the blade or hollow blade structure comprises a blade interior volume.

The blade has or comprises a pressure measuring unit. Preferably, the pressure measuring unit is located near the blade or blade root, and most preferably in the blade's interior volume. In particular, the pressure measuring unit comprises a first connection tube and a first sensing port, the first sensing port fixedly attached to one of the suction-side skin and the pressure-side skin, and having a first through-hole connecting the exterior of the blade to the first connection tube. The pressure measuring unit further comprises a second connection tube and a second sensing port, the second sensing port fixedly attached to one of the suction-side skin and the pressure-side skin, and having a second through-hole connecting the exterior of the blade to the second connection tube. The pressure measuring unit further comprises a pressure-sensing unit receiving the first connection tube at a first inlet port and receiving the second connection tube at a second inlet port. Preferably, the pressure-sensing unit is located in the vicinity of the blade root or near the blade root or in the range of the blade root. In particular the pressure-sensing unit is located in the blade's interior volume. Additionally, the pressure-sensing unit has a first resistive unit in fluid communication with the first inlet port, and a second resistive unit in fluid communication with the second inlet port, the first resistive unit and the second resistive unit also in fluid communication with ambient air at a preselected point or location, preferably in the vicinity or in the range of the pressure sensing unit, so as to allow fluid passage of ambient air into the first and second connection tubes, respectively, with a pre-determined amount of fluid resistance or flow resistance. Preferably, the first resistive unit is in permanent or time continuous fluid communication with the first inlet port, and the second resistive unit is in permanent or time continuous fluid communication with the second inlet port. The pressure-sensing unit also contains a differential pressure sensor that produces a differential-pressure signal indicative of the pressure differential across the first inlet port and the second inlet port. Preferably, the differential-pressure signal mentioned above is an internal differential-pressure signal. In particular, the differential-pressure signal or internal differential-pressure signal is then scaled-up by a pre-determined amount, based on a known attenuation factor of the first and second resistive units and the tube length of the first and second connection tubes, to produce a differential-pressure signal indicative of the difference in air pressure on or at the external surface of the blade between at the first sensing port location and the second sensing port location. Preferentially, the first connection tube and the second connection tube are made of plastic. Preferably, the first sensing port and the second sensing port are made of plastic.

In particular, the pressure measuring unit is located in the vicinity of the blade or blade root or near the blade or blade root or in the range of the blade or blade root. Preferably, the pressure measuring unit is located in the blade's interior volume.

The sensing ports can be fixedly attached to the same skin or to different skins of the suction-side skin and the pressure-side skin. In particular, the first sensing port can be fixedly attached to the suction-side skin and the second sensing port can be fixedly attached to the suction-side skin. Otherwise, the first sensing port can be fixedly attached to the pressure-side skin and the second sensing port can be fixedly attached to the pressure-side skin. Alternatively, the first sensing port can be fixedly attached to the suction-side skin and the second sensing port can be fixedly attached to the pressure-side skin. Otherwise, the first sensing port can be fixedly attached to the pressure-side skin, and the second sensing port can be fixedly attached to the suction-side skin.

Preferably, a span position is defined by a distance from the blade root along the blade axis. In particular, a span position is located between the blade root and the blade tip. Preferably, a chord position is defined by a distance from the leading edge to the trailing edge transverse to the blade axis. In particular, a chord position is located between the leading edge and the trailing edge.

According to an embodiment the sensing ports are located at the same span position. In particular, the sensing ports are located at the same chord position or at different chord positions. Preferably, the sensing ports are spaced from one another.

According to a development, the first through-hole has a first through-hole axis being inclined towards the blade tip. Hence, debris or fluids, including water, present inside the first connection tube or the first through-hole itself, can be forced to exit the pressure measuring unit under the action of centrifugal force created by the rotation of the rotor about the rotor axis. Furthermore, the inclination of the first through-hole towards the tip can prevent water, or debris, present in the exterior air to enter the pressure measuring unit via the first tap-hole opening when the rotor is rotating, due to said centrifugal force. Preferably, the second through-hole has a second through-hole axis being inclined towards the blade tip.

According to an embodiment, the pressure-sensing unit has a static purge unit. The static purge unit comprises a first main chamber, a first outlet port, the first outlet port being in fluid communication with the first main chamber, a first resistance port, the first resistance port being in fluid communication with the first main chamber, and the first inlet port, the first inlet port being in fluid communication with the first main chamber. Preferably, the first inlet port receives the first connection tube. In particular, the first resistive unit is attached to the first resistance port. Further, the static purge unit comprises a second main chamber, a second outlet port, the second outlet port being in fluid communication with the second main chamber, a second resistance port, the second resistance port being in fluid communication with the second main chamber, and the second inlet port, the second inlet port being in fluid communication with the second main chamber. Preferably, the second inlet port receives the second connection tube. In particular, the second resistive unit is attached to the second resistance port. Furthermore, the differential pressure sensor is connected to both the first outlet-port and the second outlet-port. Preferentially, the static purge unit is located in the blade's interior volume.

Preferably, the first chamber extends from the first inlet port to the first outlet port, the first resistance port being arranged between the first inlet port and the first outlet port. In particular, the first inlet port and the first outlet port are arranged on or at or in end faces of the first chamber. Preferentially, the first resistance port is arranged on or at or in a peripheral surface of the first chamber. Preferably, the second chamber extends from the second inlet port to the second outlet port, the second resistance port being arranged between the second inlet port and the second outlet port. In particular, the second inlet port and the second outlet port are arranged on or at or in end faces of the second chamber. Preferentially, the second resistance port is arranged on or at or in a peripheral surface of the second chamber.

According to a development, the static purge unit comprises a housing having a housing interior, the housing interior comprising the first main chamber and the second main chamber. Preferably, the housing has a partition wall, the first main chamber and the second main chamber are separated from one another by means of the partition wall. Preferentially, the partition wall is located within the housing and/or in the housing interior. In particular, the housing has a housing wall, the housing wall enclosing the housing interior. Preferably, the housing wall comprises the first inlet port and/or the second inlet port and/or the first outlet port and/or the second outlet port and/or the first resistance port and/or the second resistance port. Preferentially, the housing is made of plastic. Preferably, the housing wall comprises the partition wall.

In particular, the housing and/or the housing wall comprises the end faces of the first chamber. Preferentially, the housing and/or the housing wall comprises the peripheral surface of the first chamber. In particular, the housing and/or the housing wall comprises the end faces of the second chamber. Preferentially, the housing and/or housing wall comprises the peripheral surface of the second chamber.

Preferably, the first resistive unit comprises a first resistive tube, the first resistive tube having a first resistive tube ending open to ambient air. In particular, the first resistive tube is made of plastic. Preferably, the second resistive unit comprises a second resistive tube, the second resistive tube having a second resistive tube ending open to ambient air. Preferentially, the second resistive tube is made of plastic.

Preferably, the first resistive unit comprises a first bridging tube, the first bridging tube connecting the first resistive tube to the first resistance port. In particular, an inner diameter of the first resistive tube is less than an inner diameter of the first bridging tube. Preferentially, the first bridging tube is made of plastic. Preferably, the second resistive unit comprises a second bridging tube, the second bridging tube connecting the second resistive tube to the second resistance port. In particular, an inner diameter of the second resistive tube is less than an inner diameter of the second bridging tube. Preferentially, the second bridging tube is made of plastic.

According to another aspect, a wind turbine comprises a rotor being configured to revolve about a rotor axis, the rotor having a hub and at least one blade according to the invention. The blade is attached at the blade root to the hub. In addition, the wind turbine further comprises a computational unit receiving the differential pressure signal. Preferably, the computational unit further receives operational parameters indicating the operational state of the wind turbine. Preferentially, the computational unit comprises a data storage or memory. In particular, the computational unit comprises a microprocessor or microcontroller.

According to an embodiment, the computational unit further having accessible reference differential-pressure values presenting differential pressure signals obtained on a reference blade operating without flow separation, wherein the computational unit is configured to generate a flow-separation-signal indicative of the deviation of the differential pressure signal from a computed reference-signal value obtained from the operational parameters and the reference differential-pressure values or signal(s). Preferably, the reference differential-pressure values are stored in the data storage or memory.

According to a development, the computational unit further having accessible reference differential-pressure values presenting differential pressure signals obtained on a reference blade, wherein the computational unit being configured to generate an angle-of-attack signal indicative of the angle of incidence of incoming air flow, based on a comparison of the differential pressure signal with a computed reference-signal value obtained from the operational parameters and the reference differential-pressure values or signal(s). Preferably, the reference differential-pressure values are stored in the data storage or memory.

### 4 Brief description of the Drawings

Fig. 1 is a perspective view of a wind turbine having a plurality of blades.
Fig. 2 is a perspective view of one of the blades having a pressure measuring unit according to a first embodiment.
Fig. 3a is a cross-sectional view of the blade having the pressure measuring unit according to the first embodiment.
Fig. 3b is a cross-sectional view of one of the blades having a pressure measuring unit according to a second embodiment.
Fig. 4 is a schematic view of the pressure measuring unit according to the first embodiment, the schematic view comprising a sectional view of a static purge unit of the pressure measuring unit.
Fig. 5 is a perspective view of the static purge unit (on the left) and a partial sectional view of the static purge unit (on the right).
Fig. 6 is a perspective view of a part of the pressure measuring unit, the perspective view comprising a partial sectional view of the static purge unit.
Fig. 7 is another schematic view of the pressure measuring unit.
Fig. 8 is an electrical analogue of the pressure measuring unit.

### 5 Detailed description of the Invention

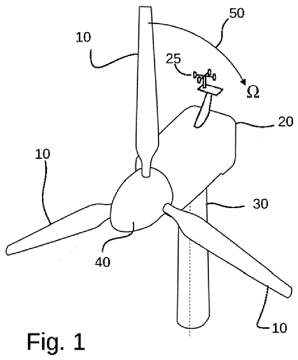

A wind turbine comprises at least one blade or one or more blades 10 having a blade root and a blade tip, the blades being attached at the blade root to a hub 40 to form a rotor that revolves about a rotor axis under the force of wind. The rotor is attached to a nacelle 20 housing an electrical generator, with the electrical generator being driven by the rotation of the rotor. The nacelle also carries an atmospheric sensing station 25, comprising a wind anemometer, a wind vane, an atmospheric pressure sensor, and an atmospheric temperature sensor. These values are used to compute the atmospheric air density. The nacelle is rotationally attached to a tower 30 to allow the nacelle and rotor to point into the wind. The blades, hence the rotor, rotate with angular velocity Ω, shown at 50 in figure 1, about the rotor axis. Additionally, the blades 10 are rotationally attached to the hub 40 to allow a rotation about the blade's axis and set, thereby, a pitch angle to the blade. Changing a blade pitch angle changes the angle with which the atmospheric air impinges on the blade, hence the aerodynamic lift generated by the blade. A pitch system 60 changes the pitch angle of the blade, based on commands from a central control unit (not shown) that controls the overall operation of the wind turbine.

Each blade 10 comprises a suction-side skin 11 that joins with a pressure-side skin 12 at a blade leading edge 14 and at a blade trailing edge 15 to form a hollow blade structure having a blade interior, so that both the suction-side skin and the pressure-side skin possess an outer surface exposed to atmospheric air, and an inner surface exposed to the blade interior. One or more spar structures 13 in the blade interior run along the axis of the blade, joining the suction-side skin 11 with the pressure-side skin 12 to provide additional stiffness and strength to the blade. As nomenclature, we note that the distance along the blade axis, from root to tip, is referred to as span, or span position, in the art.

### 5.1 Topology

The invention comprises one or more pressure measuring units 99, herein further referred to as PMU. Each PMU comprises a pressure-sensing unit 100, preferably located near the blade root (i.e. end of blade nearest to the hub), a first sensing port 151, a second sensing port 155, and a first connection tube 161 and a second connection tube 165 joining the first and second sensing ports 151 and 155 to the pressure-sensing unit 100, respectively. The pressure-sensing unit 100 produces an internal differential-pressure signal indicative of the difference in the air pressure present inside the connection tubes 161 and 165 at the junction of the connection tubes with the pressure-sensing unit. The internal differential-pressure signal is scaled-up by a pre-determined scale factor to produce a differential-pressure signal. The scale factor is function of the attenuation factor of the first and second resistive units and the tube length of the first and second connection tubes. The differential-pressure signal is, thus, indicative of the difference in air pressure on or at the external surface of the blade between the first sensing port 151 and the second sensing port 155. The scale factor can be easily determined experimentally by imposing a pressure difference of known value at the first and second tap-hole-openings, and dividing the value of the known pressure difference by the internal differential-pressure signal.

The first and second connection tubes may be selected to have various lengths, as necessary to position the first and second sensing ports at a desired span position. Examples of connection tube lengths are 12, 25, and 30 meters. For immunity against large electrical currents generated by lightning strikes, the preferred material for the first 151 and second 155 sensing ports, as well as the first 161 and second 165 connection tubes is plastic, such as, for example, polyamide.

Under normal operation and at a selected span position, the pressure distributions along the chord direction on both the suction and pressure outer surfaces of the blade display a maximum value at the front stagnation point, located near the leading edge, where the flow impinges against the blade surface, progressing to a point of minimum pressure value, typically located between the leading edge and the point of maximum blade thickness. An air particle moving along a streamline in the flow region between stagnation point and point of minimal pressure, sees lower pressure as the particle moves forward, hence the air particle receives a net forward force and undergoes acceleration. The last region is a pressure-recovery region between the point of minimum pressure value and the trailing edge, wherein the pressure rises back to, or near to, the stagnation point value. If the adverse pressure gradient along the surface, defined as the rise in pressure per unit length traveled by an air particle, exceeds a critical value, the entire flow of external air separates from the outer surface of the suction-side skin 11 and forms a large, undesired, wake region.

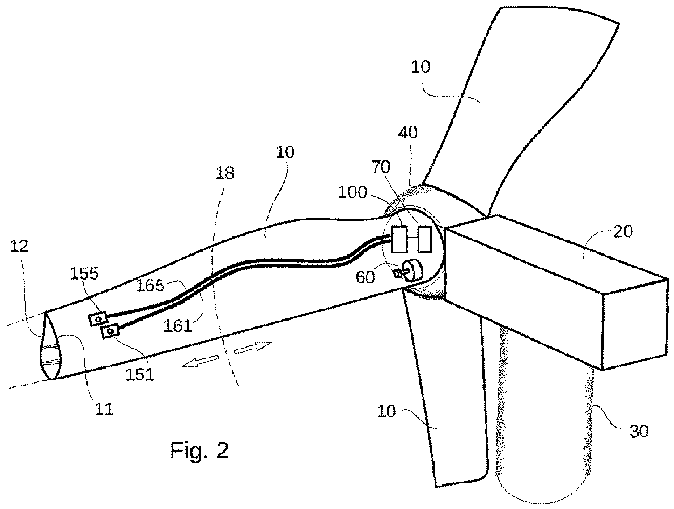

Additionally shown in figure 2 is an imaginary line 18 that separates the span along the blade into two sections, which we name the outer-span-section and the inner-span-section, with the outer-span-section extending between imaginary line 18 and the tip of the blade. The outer-span-section comprises all span positions at which the centripetal acceleration at a pre-selected rotor speed exceeds, in magnitude, the acceleration due to gravity.

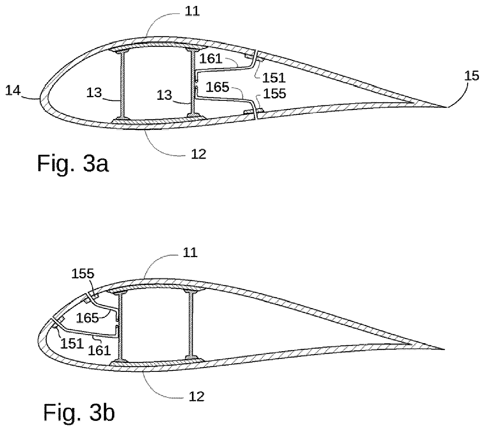

In one embodiment, shown in figure 3a, a PMU has the first sensing port 151 attached to the inside surface of the suction-side skin 11 at a selected span along the blade, and at a selected chord position in the pressure recovery region between the spar and the trailing edge. It further has the second sensing port 155 attached to the inside surface of the pressure-side skin 12, also between the spar and the trailing edge, and preferably at essentially equal span position. In this embodiment, the location of sensing ports makes the differential pressure signal equivalent to a recovery-pressure-signal indicative of the pressure difference between the suction and pressure side of the blade in the pressure recovery region.

This embodiment is also selected, for example, when the recovery-pressure-signal is elaborated to produce a flow-separation-signal indicative of the presence or absence of flow separation on the blade, as well as the nearness of the flow to separation, at the span position of measurement. In particular, the differential pressure signal of the PMU is sent to a computational unit 70. Simultaneously, the computational unit 70 receives operational parameters indicating the operational state of the turbine. The computational unit 70 further has accessible, preferably in the form of digitally stored values, reference differential-pressure values representing the differential pressure signal generated by the PMU on the same blade, or by a topologically equivalent PMU on a reference blade, when the blade is operating without flow separation. The reference blade is chosen with the cleanest, smoothest outer surface expected at blade construction, hence operates with the minimum amount of separation in any flow field. The computational unit computes a reference-signal value defined as the expected differential-signal value that would be measured by a topologically equivalent PMU on the reference blade at the current blade operating conditions. The computational unit 70 issues a flow-separation-signal whose value is indicative of the deviation of the differential pressure signal from the reference-signal value.

For example, the recovery-pressure-signal is normalized with the total aerodynamic head at the span position of measurement, and if the resulting normalized value has a magnitude below a pre-defined fraction of the normalized value measured on the reference blade having fully attached flow at this span location, the separation-signal is activated. For example, signal activation occurs with a normalized recovery-pressure signal value of 0.4, a pre-determined fraction of 1/2 and an expected reference-blade fully-attached-flow normalized value of 1.0. (Here, total aerodynamic head has the standard definition in the art, defined as 0.5 ρV², where p is the air density, and V is the total velocity of the air (sufficiently) ahead of the leading edge of the blade at the span position of measurement). Furthermore, the comparison of the recovery-pressure-signal to the expected signal gives a smoothly and continuously varying quantity in time that is proportional to, and thereby indicative of, the remaining buffer present at the current turbine operating state before flow separation occurs.

In a second embodiment, shown in figure 3b, the first sensing port 151 is attached to the inside surface of the suction-side skin 11 at a selected span along the blade, and at a selected chord position in the vicinity of the leading edge. There exists an impact-surface region in the immediate neighborhood of the leading edge, whereat the surface is exposed to, and prone to, insect collisions, as well as collision with other airborne particulates. Over time, such collisions can generate a layer of residual impact material on the blade's exterior surface. Accordingly, in the preferred embodiment, the first sensing port 151 is located preferentially downstream, or, equivalently, more towards the trailing edge, of the impact surface region.

The second embodiment further has the second sensing port 155 attached to the inside surface of the suction-side skin 11 at essentially the same selected span along the blade, and at a chord position downstream from the chord position of the first sensing port, preferably between the position of the first sensing port and the point of maximum blade thickness.

In this embodiment, the location of sensing ports define the differential pressure signal to be equivalent to a flow-acceleration-signal, since the pressure difference between the first sensing port 151 and the second sensing port 155 is indicative of the magnitude of acceleration experienced by the air-stream.

Similarly as in the previous embodiment, sending the differential pressure signal to the computational unit 70, and comparing therein the differential pressure signal to its expected value, either pre-computed or pre-stored, at the current rotor speed, current pitch angle, and atmospheric air density, the computational unit determines the angle of incidence of the incoming air flow relative to the blade's chord direction (as is well known in the art) at the span location of measurement. The value of this angle is then transmitted as an angle-of-attack signal, for use, for example, by the central turbine control computer, or SCADA system. Using the same procedure, local-wind-speed value can be computed, indicative of the magnitude of wind speed in the vicinity of the rotor. Lastly, combining the angle-of-attack signal with a model for the deceleration of the free-stream wind speed by the rotor at the current turbine operating conditions, a wind-speed-signal is generated indicative of the wind speed far ahead of the turbine.

If the computational unit sees that the flow-acceleration-signal is very different to the expected value, and if, concurrently, the atmospheric signals generated by the atmospheric sensing station 25 indicate that icing conditions are possible, then an ice-on-surface signal is generated by the computational unit 70 for the span position of the first sensing port 151. Most preferably, a plurality of pressure-measuring units (PMUs) are installed at selected span positions, and the event of coincidental ice-on-surface signals from two or more pressure-measuring units is used by the turbine controller as a robust indication of icing on the blade. It is further noted that the turbine state when icing is detected need not be a running state. A turbine with a stopped rotor and subject to atmospheric wind speeds above a threshold value, such as, for example, 5 m/s, can generate a measurable acceleration signal by pitching the blade at a predetermined angle to the wind. In this approach, an ice-free signal for the blade is generated when a predetermined minimum number of acceleration-signals along the span of the blade have values sufficiently near the expected value, either pre-computed or pre-stored.

### 5.2 Operation

A detail description of the components and functionality of a pressure measuring unit (PMU) is presented. Without loss of generality, and in the interest of conciseness, we present and describe the PMU topology for generating the recovery-pressure-signal. It is understood that the description also applies for other PMU topologies, such as, for example, the topology used to generate the acceleration-signal.

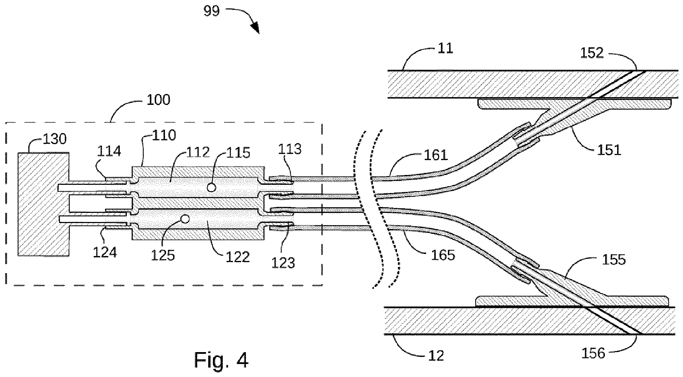

In reference to figure 4, the first sensing port 151 is attached to the inner surface of the suction-side skin 11 at a selected span position, using glue or mechanical fasteners. The first connection tube 161 is connected to the first sensing port 151. A first through-hole passes through the first sensing port 151 and the suction-side skin 11 to create a first tap-hole-opening 152 on the external surface of the suction-side skin, and to create a fluid connection between the external air passing over the first tap-hole-opening 152 and the interior of the first connection tube 161. The first through-hole has a first through-hole axis, and, in the preferred embodiment, the first through-hole-axis is inclined towards the tip of the blade, such that debris or fluids, including water, present inside the first connection tube 161 or the first through-hole itself, are forced to exit the PMU under the action of centrifugal force created by the rotation of the rotor about the rotor axis. Furthermore, the inclination of the first through-hole towards the tip prevents water, or debris, present in the exterior air to enter the PMU via the first tap-hole opening 152 when the rotor is rotating, due to said centrifugal force, and when the first 152 and second 156 tap-hole-openings are located in the outer-span-section.

Similarly, the PMU comprises the second sensing port 155 attached to the inner surface of the pressure-side skin 12, the second sensing port 155 receiving the second connection tube 165, and a second through-hole passing through the second sensing port 155 and the pressure-side skin 12 to create a second tap-hole-opening 156 on the outer surface of the pressure-side skin 12, the second through-hole further connecting the second tap-hole-opening to the interior of the second connection tube 165.

The pressure-sensing unit 100 has a static purge unit 110, and the static purge unit has a first inlet port 113 receiving the first connection tube 161, and a second inlet port 123 receiving the second connection tube 165. The first inlet port 113 is in fluid communication with a first main chamber 112 within the static purge unit 110. The static purge unit further comprises a first outlet port 114 and a first resistance port 116, both in fluid communication with the first main chamber 112. In particular, the first main chamber 112 has a resistive opening 115, the first resistance port 116 being in fluid communication with the first main chamber 112 by means of resistive opening 115. A first resistive unit 170 is attached to the first resistance port 116 and is, thereby, in fluid communication with the first main chamber 112 and the first inlet port 113. The first resistive unit also has a first resistive tube ending 173 open to ambient air. The function of the first resistive unit 170 is to provide a pre-determined amount of fluid resistance to the flow of air or other fluid, as the fluid passes from the first resistive tube ending to the first connection tube, or passes in the opposite direction. As an example, the first resistive unit 170 comprises a first bridging tube 171 united to a first resistive tube 172, with first resistive tube ending 173. As a further example, the first connection tube 161 has an inner diameter of 4 mm and length of 25 meters, the first bridging tube 171 has an inner diameter of 2 mm and length of 50 mm, and the first resistive tube 172 has an inner diameter of 1 mm, and length of 800 mm. The second inlet port 123 is in fluid communication with a second main chamber 122 within the static purge unit 110. The static purge unit further comprises a second outlet port 124 and a second resistance port 126, both in fluid communication with the second main chamber 122. In particular, the second main chamber 122 has a resistive opening 125, the second resistance port 126 being in fluid communication with the second main chamber 122 by means of resistive opening 125. A second resistive unit 174 is attached to the second resistance port 126 and is, thereby, in fluid communication with the second main chamber 122 and the second inlet port 123. The second resistive unit also has a second resistive tube ending 177 open to ambient air. The function of the second resistive unit 174 is to provide a pre-determined amount of fluid resistance to the flow of air or other fluid, as the fluid passes from the second resistive tube ending to the second connection tube, or passes in the opposite direction. As an example, the second resistive unit 174 comprises a second bridging tube 175 united to a second resistive tube 176, with second resistive tube ending 177. As a further example, the second connection tube 165 has an inner diameter of 4 mm and length of 25 meters, the second bridging tube 175 has an inner diameter of 2 mm and length of 50 mm, and the second resistive tube 176 has an inner diameter of 1 mm, and length of 800 mm. To minimize the influence of centrifugal force on the differential pressure measurement of the PMU the preferred embodiment of the invention uses essentially equal tube length for the first connection tube 161 and the second connection tube 165, and, additionally, uses essentially the same span location for the first sensing port 151 and the second sensing port 155.

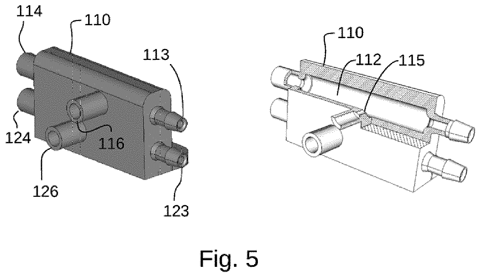

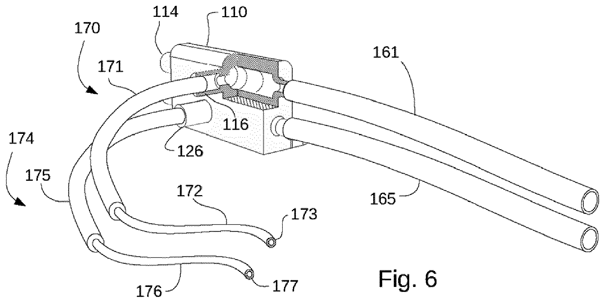

As mentioned above, the static purge unit 110 comprises a duplication of all the "first" components associated with first connection tube 161, to generate corresponding "second" components associated with second connection tube 165 as can be seen in figures 4, 5, and 6, both in number and in function, so that the topology of the tubing and parts associated with the second sensing port 155 and second connection tube 165 equals the topology of tubing and parts associated with the first sensing port 151 and first connection tube 161. In particular, second main chamber 122, second inlet port 123, second outlet port 124, and second resistive unit 174, perform the same function as first main chamber 112, first inlet port 113, first outlet port 114, and first resistive unit 170, respectively. The pressure-sensing unit 100 further comprises a differential pressure sensor 130 connected to both the first outlet-port 114 and the second outlet-port 124, and producing a differential pressure signal proportional to the difference in air pressure between said first and second outlet-ports, and, due to the negligible air flow velocity within the first main chamber and the second main chamber, the differential pressure signal is also indicative of the difference in the air pressure across the first inlet port 113 and the second inlet port 123. The differential pressure signal becomes either the recovery-pressure-signal or the acceleration-signal, depending on the chosen function of the PMU.

One purpose of the static purge unit 110 is to allow any water that has entered the PMU to exit via the first tap-hole opening 152 or second tap-hole opening 156 under the action of centrifugal force created when the rotor rotates about the rotor axis. In particular, air enters the first resistive unit 170 through first resistive tube ending 173, and progresses to the first main chamber 112 and further on to the interior of the first connection tube 161. This entrance of air into the PMU avoids the creation of a low-pressure area inside the first connection tube 161 that could hinder or prevent the water in the tube to be ejected through the first tap-hole opening 152.

An additional purpose of the static purge unit 110 is to allow a first steady flow of air through the first connection tubing 161 and a second steady flow through the second connection tubing 165 during rotor rotation, with the first steady flow starting at the first resistive tube ending 173 and exiting through the first tap-hole opening 152, and with the second steady flow starting at the second resistive tube ending 177 and exiting through the second tap-hole opening 156. Both the first and second steady flows are driven by the combination of centrifugal pumping created by the rotation of the blade about the rotor and the tube length of the first 161 and second 165 connection tubes. The first and second steady flows further hinder the entrance of foreign particles or fluids into the PMU.

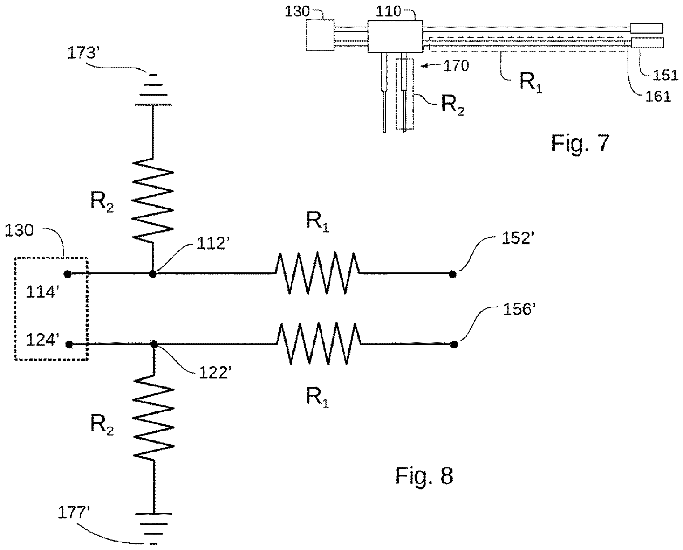

The presence of the first resistive unit 170 influences the pressure signal seen at the first outlet port 114. This effect mainly manifests itself as a reduction in signal amplitude, and can be explained with the help of an electrical analogy, shown in figure 8. The air pressure signal enters at point 152', representing the first tap-hole opening 152, travels through resistance R1 to reach node 112', representing the first main chamber 112, and proceeds through resistance R2 to reach the "ground" level 173', representing the air pressure at the first resistive tube ending 173, which also corresponds to the air pressure inside the blade at the location of the pressure sensing unit 100.

Resistance R1 represents the frictional resistance exerted by first connection tube 161 on air motion produced by pressure signals inside said tube, as well as the attenuation of the pressure signal due energy losses in the tube material accompanying the expansion and contraction of tube diameter. Similarly, resistance R2 represents the frictional resistance exerted by the first resistive unit 170 on air motion produced by pressure signals inside said unit together with the pressure-drop across resistive opening 115 to the first main chamber 112, as well as pressure attenuation due to material losses accompanying tube radial expansion.

The effect of resistances R1 and R2 is to produce a pressure signal at junction 112' that is lower than the amplitude of the pressure signal at point 152'. For steady-state pressure signals, the reduction is well approximated by the fraction R2/(R1+R2). In the preferred embodiment, R2 is significantly larger than R1, for example four times as large, so that the pressure signal at 112' and pressure signal at 122' remain clearly above any noise level of the PMU. Since the attenuation factor, R2/(R1+R2), is known at the time of construction of the PMU, the differential pressure measurement made by the differential pressure sensor 130 is multiplied by a factor of (R1+R2)/R2 within the differential pressure sensor 130 to counteract the effect of attenuation and produce the differential-pressure signal.

The length of connection tubes 161 and 165 produces an additional attenuation in the pressure signals, beyond that caused by R1 and R2. This additional attenuation is frequency dependent, and results in increasingly higher attenuation with increasingly higher frequencies. The strength of the additional attenuation increases with the length of the connection tubes. For a given selection of resolved highest frequency in the pressure temporal variation and a given selection of tube diameter and stiffness, there is a corresponding maximal tube length allowed for the connection tubes.

For example, for a PMU using a 4 mm inner diameter Nylon first connection tube 161 and providing acceptable resolution up to a pressure variational frequency of 3 Hz, the maximum tube length is about 25 meters, and for acceptable resolution up to 2 Hz the maximum tube length is about 34 meters. A PMU with 2 to 3 Hz resolution is sufficient for capturing intermittent flow separation events on the large blades of modern multi-megawatt turbines.

To apply a PMU to measure surface pressures at span locations beyond the span reachable when the pressure-sensing unit 100 is located at, or near, the blade root, a PMU is used, utilizing the maximum tube length and placing the pressure-sensing unit 100 deeper into the blade. This embodiment may entail additional circuitry or enclosures for protecting the pressure-sensing unit 100 against current surges inside the blade caused by lightning strikes.

The first and second steady flows created by centrifugal pumping appear in the electric analogy of figure 8 as currents. In particular, centrifugal pumping generates a first current, starting at 173' and exiting at 152', as well as a second current, starting at 177' and exiting at 156'. The first and second currents are essentially equal in value, since in the preferred embodiment, the lengths of connection tubes 161 and 165 are essentially equal, and the span locations of the first and second sensing port are also essentially equal. Consequently, the first and second pressure values at nodes 112' and 122' generated by the first and second currents are essentially equal to each other, thereby generating essentially zero contribution to the measured differential pressure signal in the differential pressure sensor 130.

As can be seen by this disclosure, and the example embodiments therein provided, the current invention produces a PMU that satisfies the commercial requirements listed in the introduction, namely: (a) is fast enough to resolve aerodynamic events, such as flow separation, (b) has a pressure-sensing unit located near the blade root, hence only minimally exposed to centripetal acceleration from the blade's rotation, and is easily reachable for service. (c) is essentially immune to lightning strikes since its components extending to large span positions are preferentially made of plastic materials, (d) does not have components within the impact-surface region surrounding the leading-edge of the blade, (e) it is passively self-purging, allowing long periods of unattended operation, (e) it is low cost, since the preferred sensing technology in the differential pressure sensor 130 is common electrical strain gauges, and the components extending into the blade are made of low cost materials, such as plastic.

### List of reference numbers

- 10: blade or one or more blades
- 11: a suction-side skin
- 12: a pressure-side skin
- 13: a spar structure
- 14: a blade leading edge
- 15: a blade trailing edge
- 18: an imaginary line
- 20: a nacelle
- 25: an atmospheric sensing station
- 30: a tower
- 40: a hub
- 50: rotation of the rotor
- 60: a pitch system
- 70: a computational unit
- 99: pressure measuring unit
- 100: a pressure-sensing unit
- 110: a static purge unit
- 112: a first main chamber
- 113: a first inlet port
- 114: a first outlet-port
- 115: a resistive opening
- 116: a first resistance port
- 122: a second main chamber
- 123: a second inlet port
- 124: a second outlet-port
- 125: a resistive opening
- 126: a second resistance port
- 130: a differential pressure sensor
- 151: a first sensing port
- 152: a first tap-hole-opening
- 155: a second sensing port
- 156: a second tap-hole-opening
- 161: a first connection tube
- 165: a second connection tube
- 170: a first resistive unit
- 171: a first bridging tube
- 172: a first resistive tube
- 173: a first resistive tube ending
- 174: a second resistive unit
- 175: a second bridging tube
- 176: a second resistive tube
- 177: a second resistive tube ending
- Ω: angular velocity of the rotor

## Claims

1. A wind turbine blade (10) having a leading edge (14) and a trailing edge (15), a blade root, a blade tip, a blade axis pointing from blade root to blade tip, and having a pressure-side skin (12) and a suction-side skin (11), the suction-side skin (11) joining at the leading edge (14) and trailing edge (15) with the pressure-side skin (12) to form a hollow blade structure, the wind turbine blade comprising a pressure measuring unit (99), the pressure measuring unit (99) comprising:
a first connection tube (161) and a first sensing port (151), the first sensing port (151) fixedly attached to one of the suction-side skin (11) and the pressure-side skin (12), and having a first through-hole connecting the exterior of the blade (10) to the first connection tube (161),
a second connection tube (165) and a second sensing port (155), the second sensing port (155) fixedly attached to one of the suction-side skin (11) and the pressure-side skin (12), and having a second through-hole connecting the exterior of the blade (10) to the second connection tube (165),
a pressure-sensing unit (100) receiving the first connection tube (161) at a first inlet port (113) and receiving the second connection tube (165) at a second inlet port (123), the pressure-sensing unit (100) further having:
a first resistive unit (170) in fluid communication with the first inlet port (113), and
a second resistive unit (174) in fluid communication with the second inlet port (123), the first resistive unit (170) and the second resistive unit (174) also in fluid communication with ambient air at a preselected point so as to allow fluid passage of ambient air into the first and second connection tubes (161, 165), respectively, with a pre-determined amount of fluid resistance, and
a differential pressure sensor (130) producing a differential-pressure signal indicative of the pressure differential across the first inlet port (113) and the second inlet port (123).

2. The wind turbine blade (10) according to claim 1, wherein the pressure-sensing unit (100) is located in the vicinity of the blade root.

3. The wind turbine blade (10) according claim 1 or 2, wherein the first through-hole has a first through-hole axis, the first through-hole axis being inclined towards the blade tip.

4. The wind turbine blade (10) according to one of the preceding claims, the pressure-sensing unit (100) further having a static purge unit (110), the static purge unit (110) comprising:
a first main chamber (112), a first outlet port (114), a first resistance port (116), the first inlet port (113), a second main chamber (122), a second outlet port (124), a second resistance port (126), and the second inlet port (123),
wherein the first outlet port (114), the first resistance port (116) and the first inlet port (113) are in fluid communication with the first main chamber (112), respectively,
wherein the first resistive unit (170) is attached to the first resistance port (116),
wherein the second outlet port (124), the second resistance port (126) and the second inlet port (123) are in fluid communication with the second main chamber (122), respectively,
wherein the second resistive unit (174) is attached to the second resistance port (126), and
wherein the differential pressure sensor (130) is connected to both the first outlet-port (114) and the second outlet-port (124).

5. The wind turbine blade (10) according to claim 4, wherein the static purge unit (110) comprises a housing, the housing having:
a housing interior, a partition wall, and a housing wall enclosing the housing interior,
wherein the housing interior comprises the first main chamber (112) and the second main chamber (122),
wherein the first main chamber (112) and the second main chamber (122) are separated from one another by means of the partition wall, and
wherein the housing wall comprises the first inlet port (113), the second inlet port (124), the first outlet port (114), the second outlet port (124), the first resistance port (116), and the second resistance port (126).

6. The wind turbine blade (10) according to one of the preceding claims, wherein the first resistive unit (170) comprises a first resistive tube (172), the first resistive tube (172) having a first resistive tube ending (173) open to ambient air, and wherein the second resistive unit (174) comprises a second resistive tube (176), the second resistive tube (176) having a second resistive tube ending (177) open to ambient air.

7. The wind turbine blade (10) according to one of the preceding claims, wherein the blade (10) comprises a blade interior volume, the pressure measuring unit (99) being located in the blade's interior volume.

8. The wind turbine blade (10) according to one of the preceding claims, wherein the first resistive unit (170) is in time continuous fluid communication with the first inlet port (113), and the second resistive unit (174) is in time continuous fluid communication with the second inlet port (123).

9. A wind turbine comprising a rotor being configured to revolve about a rotor axis, the rotor having a hub (40) and at least one blade (10) according to one of the preceding claims, the blade (10) being attached at the blade root to the hub (40), the wind turbine further comprising a computational unit (70) receiving the differential pressure signal.

10. The wind turbine according to claim 9, wherein the computational unit (70) further receives operational parameters indicating the operational state of the turbine.

11. The wind turbine according to claim 10, wherein the computational unit (70) further has accessible reference differential-pressure values presenting differential pressure signals obtained on a reference blade operating without flow separation, the computational unit (70) being configured to generate a flow-separation-signal indicative of the deviation of the differential pressure signal from a computed reference-signal value obtained from the operational parameters and the reference differential-pressure values.

12. The wind turbine according to claim 10, wherein the computational unit (70) further has accessible reference differential-pressure values presenting differential pressure signals obtained on a reference blade, the computational unit (70) being configured to generate an angle-of-attack signal indicative of the angle of incidence of incoming air flow, based on a comparison of the differential pressure signal with a computed reference-signal value obtained from the operational parameters and the reference differential-pressure values.

## Patentansprüche

1. Windturbinenblatt (10) mit einer Vorderkante (14) und einer Rückkante (15), einer Blattwurzel, einer Blattspitze, einer Blattachse, die von der Blattwurzel zur Blattspitze weist, und mit einer druckseitigen Haut (12) und einer sogseitigen Haut (11), wobei die sogseitige Haut (11) an der Vorderkante (14) und Rückkante (15) mit der druckseitigen Haut (12) verbunden ist, um eine hohle Blattstruktur zu bilden, wobei das Windturbinenblatt eine Druckmesseinheit (99) umfasst, wobei die Druckmesseinheit (99) folgendes umfasst:
eine erste Verbindungsröhre (161) und einen ersten Messanschluss (151), wobei der erste Messanschluss (151) fest an einer von der sogseitigen Haut (11) und der druckseitigen Haut (12) angebracht ist und ein erstes Durchgangsloch aufweist, das die Außenseite des Blattes (10) mit der ersten Verbindungsröhre (161) verbindet,
eine zweite Verbindungsröhre (165) und einen zweiten Messanschluss (155), wobei der zweite Messanschluss (155) fest an einer von der sogseitigen Haut (11) und der druckseitigen Haut (12) angebracht ist und ein zweites Durchgangsloch aufweist, das die Außenseite des Blattes (10) mit der zweiten Verbindungsröhre (165) verbindet,
eine Drucksensoreinheit (100), die die erste Verbindungsröhre (161) an einem ersten Einlassanschluss (113) aufnimmt und die zweite Verbindungsröhre (165) an einem zweiten Einlassanschluss (123) aufnimmt, wobei die Drucksensoreinheit (100) ferner folgendes aufweist:
eine erste Widerstandseinheit (170), die in Fluidverbindung mit dem ersten Einlassanschluss (113) steht, und
eine zweite Widerstandseinheit (174), die in Fluidverbindung mit dem zweiten Einlassanschluss (123) steht,
wobei die erste Widerstandseinheit (170) und die zweite Widerstandseinheit (174) auch in Fluidverbindung mit der Umgebungsluft an einer vorgewählten Stelle stehen, sodass ein Fluiddurchtritt von Umgebungsluft in die erste bzw. zweite Verbindungsröhre (161, 165) mit einem vorbestimmten Fluidwiderstand möglich ist, und
einen Differenzdrucksensor (130), der ein Differenzdrucksignal erzeugt, das auf die Druckdifferenz zwischen dem ersten Einlassanschluss (113) und dem zweiten Einlassanschluss (123) hinweist.

2. Windturbinenblatt (10) nach Anspruch 1, wobei die Drucksensoreinheit (100) in der Nähe der Blattwurzel angeordnet ist.

3. Windturbinenblatt (10) nach Anspruch 1 oder 2, wobei das erste Durchgangsloch eine erste Durchgangslochachse aufweist, die zur Blattspitze hin geneigt ist.

4. Windturbinenblatt (10) nach einem der vorhergehenden Ansprüche, wobei die Drucksensoreinheit (100) ferner eine statische Spüleinheit (110) aufweist,
wobei die statische Spüleinheit (110) folgendes umfasst:
eine erste Hauptkammer (112), einen ersten Auslassanschluss (114), einen ersten Widerstandsanschluss (116), den ersten Einlassanschluss (113), eine zweite Hauptkammer (122), einen zweiten Auslassanschluss (124), einen zweiten Widerstandsanschluss (126) und den zweiten Einlassanschluss (123),
wobei der erste Auslassanschluss (114), der erste Widerstandsanschluss (116) und der erste Einlassanschluss (113) jeweils in Fluidverbindung mit der ersten Hauptkammer (112) stehen,
wobei die erste Widerstandseinheit (170) an den ersten Widerstandsanschluss (116) angeschlossen ist,
wobei der zweite Auslassanschluss (124), der zweite Widerstandsanschluss (126) und der zweite Einlassanschluss (123) jeweils in Fluidverbindung mit der zweiten Hauptkammer (122) stehen,
wobei die zweite Widerstandseinheit (174) an den zweiten Widerstandsanschluss (126) angeschlossen ist, und
wobei der Differenzdrucksensor (130) sowohl mit dem ersten Auslassanschluss (114) als auch mit dem zweiten Auslassanschluss (124) verbunden ist.

5. Windturbinenblatt (10) nach Anspruch 4, wobei die statische Spüleinheit (110) ein Gehäuse umfasst, wobei das Gehäuse folgendes aufweist:
einen Gehäuseinnenraum, eine Trennwand und eine Gehäusewand, die den Gehäuseinnenraum umschließt,
wobei der Gehäuseinnenraum die erste Hauptkammer (112) und die zweite Hauptkammer (122) umfasst,
wobei die erste Hauptkammer (112) und die zweite Hauptkammer (122) durch die Trennwand voneinander getrennt sind, und
wobei die Gehäusewand den ersten Einlassanschluss (113), den zweiten Einlassanschluss (124), den ersten Auslassanschluss (114), den zweiten Auslassanschluss (124), den ersten Widerstandsanschluss (116) und den zweiten Widerstandsanschluss (126) umfasst.

6. Windturbinenblatt (10) nach einem der vorhergehenden Ansprüche, wobei die erste Widerstandseinheit (170) eine erste Widerstandsröhre (172) umfasst, wobei die erste Widerstandsröhre (172) ein erstes Widerstandsröhrenende (173) aufweist, das zur Umgebungsluft offen ist, und wobei die zweite Widerstandseinheit (174) eine zweite Widerstandsröhre (176) umfasst, wobei die zweite Widerstandsröhre (176) ein zweites Widerstandsröhrenende (177) aufweist, das zur Umgebungsluft offen ist.

7. Windturbinenblatt (10) nach einem der vorhergehenden Ansprüche, wobei das Blatt (10) ein Blattinnenvolumen aufweist und die Druckmesseinheit (99) im Blattinnenvolumen angeordnet ist.

8. Windturbinenblatt (10) nach einem der vorhergehenden Ansprüche, wobei die erste Widerstandseinheit (170) in zeitlich kontinuierlicher Fluidverbindung mit dem ersten Einlassanschluss (113) steht und die zweite Widerstandseinheit (174) in zeitlich kontinuierlicher Fluidverbindung mit dem zweiten Einlassanschluss (123) steht.

9. Windturbine mit einem Rotor, der so konfiguriert ist, dass er sich um eine Rotorachse dreht, wobei der Rotor eine Nabe (40) und mindestens ein Blatt (10) nach einem der vorhergehenden Ansprüche aufweist, wobei das Blatt (10) an der Blattwurzel an der Nabe (40) befestigt ist, wobei die Windturbine ferner eine Recheneinheit (70) umfasst, die das Differenzdrucksignal empfängt.

10. Windturbine nach Anspruch 9, wobei die Recheneinheit (70) außerdem Betriebsparameter empfängt, die auf den Betriebszustand der Turbine hinweisen.

11. Windturbine nach Anspruch 10, wobei die Recheneinheit (70) ferner über zugängliche Referenz-Differenzdruckwerte verfügt, die Differenzdrucksignale darstellen, die an einem Referenzblatt erhalten wurden, das ohne Strömungsablösung arbeitet, wobei die Recheneinheit (70) so konfiguriert ist, dass sie ein Strömungsablösungssignal erzeugt, das auf die Abweichung des Differenzdrucksignals von einem berechneten Referenzsignalwert hinweist, der aus den Betriebsparametern und den Referenz-Differenzdruckwerten erhalten wurde.

12. Windturbine nach Anspruch 10, wobei die Recheneinheit (70) ferner zugängliche Referenz-Differenzdruckwerte aufweist, die Differenzdrucksignale darstellen, die an einem Referenzblatt erhalten wurden, wobei die Recheneinheit (70) so konfiguriert ist, dass sie ein auf den Einfallswinkel der ankommenden Luftströmung hinweisendes Anstellwinkelsignal erzeugt, basierend auf einem Vergleich des Differenzdrucksignals mit einem berechneten Referenzsignalwert, der aus den Betriebsparametern und den Referenz-Differenzdruckwerten erhalten wurde.

## Revendications

1. Pale d'éolienne (10) présentant un bord d'attaque (14) et un bord de fuite (15), une emplanture de pale, un bout de pale, un axe de pale qui va de l'emplanture de pale vers le bout de pale, et qui présente un revêtement du côté pression (12), et un revêtement du côté aspiration (11), le revêtement du côté aspiration (11) rejoignant, au niveau du bord d'attaque (14) et du bord de fuite (15), le revêtement du côté pression (12), afin de former une structure de pale creuse, la pale d'éolienne comprenant une unité de mesure de la pression (99), l'unité de mesure de la pression (99) comprenant :
un premier tube de connexion (161) et un premier orifice de détection (151), le premier orifice de détection (151) étant fixé de manière fixe à l'un du revêtement du côté aspiration (11) et du revêtement du côté pression (12), et présentant un premier trou traversant qui connecte l'extérieur de la pale (10) au premier tube de connexion (161),
un second tube de connexion (165) et un second orifice de détection (155), le second orifice de détection (155) étant fixé de manière fixe à l'un du revêtement du côté aspiration (11) et du revêtement du côté pression (12), et présentant un second trou traversant qui connecte l'extérieur de la pale (10) au second tube de connexion (165),
une unité de détection de la pression (100) qui reçoit le premier tube de connexion (161) au niveau d'un premier orifice d'entrée (113) et qui reçoit le second tube de connexion (165) au niveau d'un second orifice d'entrée (123), l'unité de détection de la pression (100) présentant en outre :
une première unité résistive (170) en communication de fluide avec le premier orifice d'entrée (113), et
une seconde unité résistive (174) en communication de fluide avec le second orifice d'entrée (123),
la première unité résistive (170) et la seconde unité résistive (174) étant également en communication de fluide avec l'air ambiant en un point présélectionné, afin de permettre un passage de fluide de l'air ambiant dans les premier et second tubes de connexion (161, 165), respectivement, avec une quantité prédéterminée de résistance de fluide, et
un capteur de pression différentielle (130) qui produit un signal de pression différentielle indicatif de la pression différentielle entre le premier orifice d'entrée (113) et le second orifice d'entrée (123).

2. Pale d'éolienne (10) selon la revendication 1, dans laquelle l'unité de détection de la pression (100) se situe à proximité de l'emplanture de pale.

3. Pale d'éolienne (10) selon la revendication 1 ou 2, dans laquelle le premier trou traversant présente un axe de premier trou traversant, l'axe de premier trou traversant étant incliné vers le bout de pale.

4. Pale d'éolienne (10) selon l'une quelconque des revendications précédentes, l'unité de détection de la pression (100) présentant en outre une unité de purge statique (110), l'unité de purge statique (110) comprenant :
une première chambre principale (112), un premier orifice de sortie (114), un premier orifice de résistance (116), le premier orifice d'entrée (113), une seconde chambre principale (122), un second orifice de sortie (124), un second orifice de résistance (126), et le second orifice d'entrée (123),
dans laquelle le premier orifice de sortie (114), le premier orifice de résistance (116) et le premier orifice d'entrée (113), sont en communication de fluide avec la première chambre principale (112), respectivement,
dans laquelle la première unité résistive (170) est fixée sur le premier orifice de résistance (116),
dans laquelle le second orifice de sortie (124), le second orifice de résistance (126) et le second orifice d'entrée (123), sont en communication de fluide avec la seconde chambre principale (122), respectivement,
dans laquelle la seconde unité résistive (174) est fixée sur le second orifice de résistance (126), et
dans laquelle le capteur de pression différentielle (130) est connecté au premier orifice de sortie (114) et au second orifice de sortie (124).

5. Pale d'éolienne (10) selon la revendication 4, dans laquelle l'unité de purge statique (110) comprend un logement, le logement présentant :
un intérieur de logement, une paroi de séparation, et une paroi de logement qui entoure l'intérieur de logement,
dans laquelle l'intérieur de logement comprend la première chambre principale (112) et la seconde chambre principale (122),
dans laquelle la première chambre principale (112) et la seconde chambre principale (122), sont séparées l'une de l'autre par la paroi de séparation, et
dans laquelle la paroi de logement comprend le premier orifice d'entrée (113), le second orifice d'entrée (124), le premier orifice de sortie (114), le second orifice de sortie (124), le premier orifice de résistance (116), et le second orifice de résistance (126).

6. Pale d'éolienne (10) selon l'une quelconque des revendications précédentes, dans laquelle la première unité résistive (170) comprend un premier tube résistif (172), le premier tube résistif (172) présentant une extrémité de premier tube résistif (173) qui s'ouvre vers l'air ambiant, et dans laquelle la seconde unité résistive (174) comprend un second tube résistif (176), le second tube résistif (176) présentant une extrémité de second tube résistif (177) qui s'ouvre vers l'air ambiant.

7. Pale d'éolienne (10) selon l'une quelconque des revendications précédentes, dans laquelle la pale (10) comprend un volume intérieur de pale, l'unité de mesure de la pression (99) se situant dans le volume intérieur de la pale.

8. Pale d'éolienne (10) selon l'une quelconque des revendications précédentes, dans laquelle la première unité résistive (170) est en communication de fluide permanente avec le premier orifice d'entrée (113), et la seconde unité résistive (174) est en communication de fluide permanente avec le second orifice d'entrée (123).

9. Éolienne comprenant un rotor configuré afin de tourner autour d'un axe de rotor, le rotor présentant un moyeu (40) et au moins une pale (10) selon l'une quelconque des revendications précédentes, la pale (10) étant fixée sur le moyeu (40) au niveau de l'emplanture de pale, l'éolienne comprenant en outre une unité de calcul (70) qui reçoit le signal de pression différentielle.

10. Éolienne selon la revendication 9, dans laquelle l'unité de calcul (70) reçoit en outre des paramètres opérationnels qui indiquent l'état opérationnel de la turbine.

11. Éolienne selon la revendication 10, dans laquelle l'unité de calcul (70) présente en outre des valeurs accessibles de pression différentielle de référence, qui présentent des signaux de pression différentielle obtenus sur une pale de référence qui fonctionne sans décollement de l'écoulement, l'unité de calcul (70) étant configurée afin de générer un signal de décollement de l'écoulement indicatif d'un écart du signal de pression différentielle à partir d'une valeur de signal de référence calculée, obtenue à partir des paramètres opérationnels et des valeurs de pression différentielle de référence.

12. Éolienne selon la revendication 10, dans laquelle l'unité de calcul (70) présente en outre des valeurs accessibles de pression différentielle de référence, qui présentent des signaux de pression différentielle obtenus sur une pale de référence, l'unité de calcul (70) étant configurée afin de générer un signal d'angle d'attaque indicatif de l'angle d'incidence du flux d'air entrant, sur la base d'une comparaison entre le signal de pression différentielle, et la valeur du signal de référence calculée, obtenue à partir des paramètres opérationnels et des valeurs de pression différentielle de référence.
